(19) Europäisches Patentamt

European Patent Office

Office européen des brevets

(11) **EP 1 683 283 B1**

(12) **EUROPEAN PATENT SPECIFICATION**

(45) Date of publication and mention
of the grant of the patent:
**13.02.2008 Bulletin 2008/07**

(21) Application number: **04798354.9**

(22) Date of filing: **02.11.2004**

(51) Int Cl.:
*H04B 10/155* (2006.01)    *H04B 10/18* (2006.01)

(86) International application number:
**PCT/GB2004/004623**

(87) International publication number:
**WO 2005/046093 (19.05.2005 Gazette 2005/20)**

(54) **METHOD AND APPARATUS FOR ADAPTING AN INFORMATION CARRYING SIGNAL**

VERFAHREN UND VORRICHTUNG ZUR ANPASSUNG EINES INFORMATIONSFÜHRENDEN SIGNALS

PROCEDE ET DISPOSITIF PERMETTANT D'ADAPTER UN SIGNAL PORTEUR D'INFORMATIONS

(84) Designated Contracting States:
**AT BE BG CH CY CZ DE DK EE ES FI FR GB GR HU IE IS IT LI LU MC NL PL PT RO SE SI SK TR**

(30) Priority: **03.11.2003 GB 0325584**

(43) Date of publication of application:
**26.07.2006 Bulletin 2006/30**

(73) Proprietor: **Elonics Limited**
**Edinburgh EH14 1BX (GB)**

(72) Inventor: **SRODZINSKI, David**
**Edinburgh EH14 1BX (GB)**

(74) Representative: **Fulton, David James et al**
**Kennedys Patent Agency Limited**
**185 St Vincent Street**
**Glasgow G2 5QD (GB)**

(56) References cited:
**EP-A- 0 718 990**      **EP-A- 0 975 104**
**US-A- 5 969 839**      **US-A- 6 091 535**

**Description**

This invention relates to the field of communications systems. More particularly, this invention relates to a method and apparatus for adapting an information carrying signal. The method and apparatus can be readily employed within a transmitter of a communication system so as to overcome signal impairment effects within the system. The invention has particular use as an equalisation element in the field of fibre optic communications networks to counteract dispersion and other complex signal impairments.

**Background Art**

Electronically adjustable equalization transmitter schemes for communications systems are well known in the art. Such a scheme is embodied in US Patent No. US 6,393,062 entitled "Methods and circuits for generating a pre-emphasis waveform". This scheme relies on pre-compensating a waveform by selectively boosting the electronic signal to a value larger than the nominal signal, essentially providing data-dependant pulse amplitude modulation.

There are however several major drawbacks with this scheme. In the first instance pulse amplitude modulation is not a suitable control method for increasing the optical intensity in order to provide compensation in an optical fibre system because:

a) in standard systems amplitude information is removed using a pre-laser limiting or clipping function in order to simplify driver electronics; and
b) lasers are very non-linear devices and so amplitude modulation is non-linearly related to optical intensity.

As a result lasers do not respond or do not respond well to pulse amplitude modulation.

Secondly, with higher data-rate signals, for example greater than 10 Gbps, such a scheme is very difficult to practically implement in a low cost electronic CMOS or BiCMOS silicon technologies as the required switching speeds and slew rates will be unwieldy and difficult to control accurately.

A further drawback is that the amplitude and settling characteristics relied upon to perform the equalisation are subject to unacceptable variations and so are not suitable for precision or high speed applications. As shown in a particular embodiment, the scheme requires additional circuitry to accurately control the amount of boost which in-turn increases complexity, power and cost of the system.

Furthermore, the signal boosting scheme described requires the driving of a larger than normal signal. This may not always be possible given power supply constraints or, conversely, requires some signal amplitudes to be reduced, which does not maximise available signal to noise available for these signals.

European Patent Application No. EP 0,884,867 describes a system for "Equalization, pulse shaping and regeneration of optical signals". In particular this document teaches of an equalisation arrangement for use in optical systems with optical fibre media. The scheme relies on equalisation using weighted tap filters crafted so as to employ optical components in the optical domain. Such an approach again exhibits several inherent disadvantages.

Firstly, such equalisation can only compensate for linear effects that contribute to Inter-Symbol-Interference (ISI) such as those caused by dispersion. However, other non-linear effects including laser and fibre chirp, changes in fibre characteristics with optical intensity, duty cycle distortions and unequal rise/fall times of the transmitter or receiver are not addressed.

Secondly, the system is relatively expensive to make as it relies on several expensive optical amplifiers, optical monitors and customised and precise lengths of delay matched optical fibres.

Thirdly, the physical size and inherent power requirements make such schemes less desirable or practical in modern installations.

US Patent No. 6,091,535 describes an optical transmitter which can be employed to pre-condition an information carrying signal with a frequency chirp prior to the signal being propagated through a single mode optical fibre. The frequency chirp is induced by the controlled operation of a Mach -Zehnder modulator and provides a means for compensating for the effects of chromatic dispersion induced on the signal due to its propagation through the fibre.

European Patent Application No. EP 0 975 104 also employs the controlled operation of an optical modulator to impart information onto an optical carrying signal. In particular, this document teaches of a method and an apparatus for generating a modulated Return to Zero (RTZ) signal from a RTZ signal by driving the modulator with a non-RTZ signal.

It is an object of an aspect of the present invention to provide a method and apparatus for filtering an information carrying signal. In particular this method and apparatus can be employed for equalisation of the information carrying signal so as to overcome the problematic features of the prior art.

## Statements of Invention

According to a first aspect of the present invention there is provided a method of adapting an information carrying signal that comprises a plurality of data pulses that exhibit a range of pulsewidths and which are generated by a transmitter for transmission through a propagation medium, the method comprising the step of introducing one or more sub-pulses to one or more of the plurality of data pulses prior to the information carrying signal entering the signal propagation medium wherein a pulsewidth of each of the one or more sub-pulses is less than a minimum pulsewidth of the plurality of data pulses.

The introduction of the one or more sub-pulses whose pulse width is less than the minimum pulse width of the plurality of data pulses allows for the energy contained within the plurality of data pulses to be altered thus providing a means for the information carrying signal to be controllably adapted.

Most preferably an amplitude of the one or more sub-pulses is of an opposite sign to an amplitude of an associated data pulse.

Preferably the introduction of one or more of the sub-pulses are timed so that these sub-pulses are contained within one or more of the plurality of data pulses to which the sub-pulses are introduced.

Preferably the introduction of one or of the more sub-pulses are timed so that these sub-pulses coincide with one or more edges of one or more of the plurality of data pulses to which the sub-pulses are introduced.

Preferably, the one or more sub-pulses are introduced to one or more of the plurality of data pulses when the data pulse exhibits a pulsewidth above a first predetermined pulsewidth of the plurality of data pulses so as to provide a means for low frequency filtering the information carrying signal.

Alternatively, the one or more sub-pulses are introduced to one or more of the plurality of data pulses when the data pulse exhibits a pulsewidth below a second predetermined pulsewidth of the plurality of data pulses so as to provide a means for high frequency filtering the information carrying signal.

Most preferably the first predetermined pulsewidths of the plurality of data pulses corresponds to the minimum pulsewidth of the plurality of data pulses so as to provide a means for equalising the information carrying signal.

It is known that attenuation of a data signal is frequency or pulsewidth dependent i.e. the higher the frequency the greater the attenuation experienced. Thus by employing the sub-pulses to effectively remove energy from the lower frequency components of the data signal equalisation of the data signal following transmission through a propagation medium is achieved.

Preferably the timing of introducing the one or more sub-pulses to one or more of the plurality of data pulses is variable.

Most preferably, the number of sub-pulses introduced is directly dependent upon the pulsewidth of the associated data pulse. Alternatively, the pulsewidth of the one or more sub-pulses is directly dependent upon the pulsewidth of the associated data pulse.

Preferably the coinciding of the one or more sub-pulses with one or more edges of one or more of the plurality of data pulses acts to time shift a rising and/or a falling edge of an associated data pulse.

Optionally the time shifting of the rising and/or the falling edge of the associated data pulse is by a predetermined value. Alternatively, the time shifting of the rising and/or the falling edge of the associated data pulse is directly dependent upon the pulsewidth of the associated data pulse.

Preferably the time shifting of the rising edge of an associated data pulse comprises advancing in time the rising edge.

Preferably the time shifting of the falling edge of an associated data pulse comprises delaying in time the falling edge.

According to a second aspect of the present invention there is provided an electronic circuit suitable for adapting an electronic input signal of a transmitter, the electronic input signal comprising a plurality of electrical data pulses, the electronic circuit comprises an electronic input channel, a clock pulse phase delay circuit, a signal processor and an electronic output channel wherein the signal processor analyses one or more of the plurality of electrical data pulses supplied on the electronic input channel and one or more clock pulse phase delay signals provided by the clock pulse phase delay circuit so as to introduce one or more electrical sub-pulses to one or more of the plurality of electrical data pulses so as to provide an adapted electronic output signal on the electronic output channel.

Preferably the introduction of one or more of the electrical sub-pulses are timed so that these electrical sub-pulses are contained within one or more of the plurality of electrical data pulses to which the electrical sub-pulses are introduced.

Preferably the introduction of one or more of the electrical sub-pulses are timed so these electrical sub-pulses coincide with one or more edges of one or more of the plurality of electrical data pulses to which the electrical sub-pulses are introduced.

Most preferably the clock pulse phase delay circuit comprises means for supply a first clock pulse and one or more phase delayed clock pulses to the signal processor.

Preferably the signal processor comprises first electronic means for producing an internal signal pulse when subsequent electrical data pulses exhibit substantially the same value.

Preferably the signal processor further comprises a second electronic means for introducing an electronic sub-pulse to the electronic input signal when the internal signal pulse is detected by the second electronic means.

Preferably the signal processor further comprises a third electronic means for altering the timing of the electrical sub-pulses so allowing the sub-pulses to coincide with a rising or falling edge of an electrical data pulse.

Most preferably the timing of the first electronic means is controlled by the first clock pulse.

Preferably the second and third electronic means are controlled by the combination of the first clock pulse and the one or more phase delayed clock pulses.

## Brief Description of Drawings

In the following detailed description of the preferred embodiments or mode, reference is made to the accompanying drawings, which form part hereof, and in which are shown, by way of illustration, specific embodiments in which the invention may be practised. It is to be understood that other embodiments may be utilised and structural changes may be made without departing from the scope of the present invention.

FIGURE 1 shows a system block diagram of a typical communication channel that will be used for reference purposes;

FIGURE 2 shows a system block diagram of a typical long-haul fibre optic communication channel that incorporates an adaptable signal processing element, shown within the transmitter function, in accordance with an aspect of the present invention;

FIGURE 3 shows an example of a standard transmitted (in) and received (out) signal waveform before any wave signal processing in the transmitter is applied;

FIGURE 4 shows the resulting "eye diagram" of the information presented in Figure 3;

FIGURE 5 shows details of the operation of the adaptable signal processing element employed to equalise the received (out) signal waveform at the output of the transmitter and in particular schematically presents definitions of coefficient terms employed for achieving this result.

FIGURE 6 shows an example of a modified transmitted (in) and received (out) signal waveform after the adaptable signal processing element within the transmitter is applied;

FIGURE 7 shows the resulting improved "eye diagram" of the information presented in Figure 6;

FIGURE 8 shows a top level schematic view of the preferred embodiment of the adaptable signal processing element;.

FIGURE 9 shows detail of the clock pulse signal waveforms employed within the adaptable signal processing element such that it operates to equalise the received (out) signal waveform;

FIGURE 10 shows schematic detail of the signal processor apparatus; and

FIGURE 11 shows details of the waveforms generated within adaptable signal processing element of Figure 5.

## Detailed Description

Adaptable schemes can be used in order to improve some desired metric of a communications system's performance. By improving the system performance an adaptable system allows higher bandwidth or higher data-rate or longer reach or more compact or less expensive systems to be made.

A detailed description of the method and apparatus for such an adaptable system shall now be described and in particular to its employment as an equaliser for an information carrying signal transmitted within an optical system. This equalisation can be used to counteract bandwidth limiting or other signal impairments within the channel.

Within a communications system typical signal impairment or degradation mechanisms include the rise time, fall time, bandwidth or other distortion of the receiver or transmitter, dispersion, chirp, reflection and bandwidth limitations within the media and interference from other signals. The words signal impairments or degradation mechanism will be used extensively throughout this document for any linear or non-linear, stationary or non-stationary or other non-ideal affect anywhere in the communications channel that causes the received signal to be adversely affected.

The resultant effects of these degradation mechanisms on the signal are often dependant on the inter-relationship of the signal being transmitted and the degradation mechanism itself. Within some bounds these are repeatable effects. These will be generally referred to as deterministic effects throughout this document.

The task of equalisation or compensation is to modify the physical characteristics of an information carrying signal in order to correct, accommodate or rectify some impairment in it. In an aspect of the present invention the equalisation is achieved by synthesising a new transmitted wave-shape using a high speed signal processor. This signal processing, synthesis and resultant equalisation is achieved using a technique whereby energy is added or subtracted to the wave shape in the form of constructive or destructive sub-pulses and/or by manipulating within the information carrying signal individual pulse edge positions. The method and apparatus for the preferred embodiment of this are as follows.

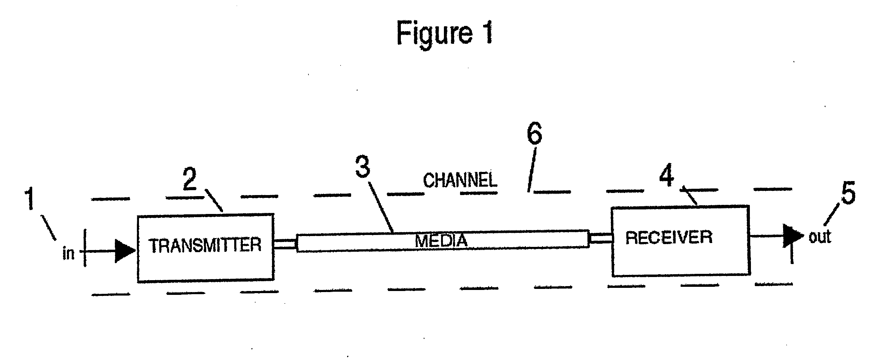

A typical one-way communications system is shown in Figure 1. The channel 6 transmits its input signal, in 1, via the transmitter 2, through the media 3, to the receiver 4 and out in the form of output signal 5.

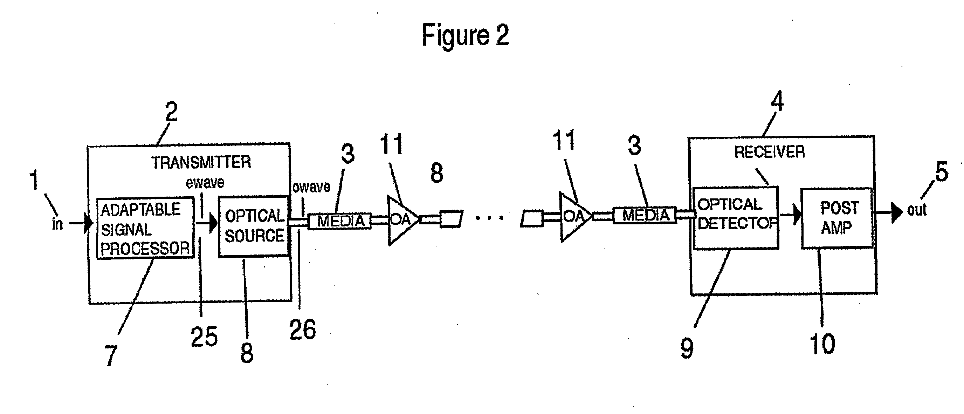

A typical long-haul fibre optic communication showing the preferred embodiment is shown in Figure 2. The transmitter 2 includes the adaptable signal processor 7 that provides for wave synthesis equalisation in front of the optical source 8. The input signal 1, is modified by the action of the adaptable signal processor to produce the equalised electronic signal, ewave 25. The optical source converts the electronic signal into an equivalent optical signal, owave 26. The media 3, here an optical fibre, itself is shown partitioned into smaller lengths with optical amplifiers 11 used to boost the signal along the length, as is typical of these systems, in order to maximise transmission distances. Amplifiers or repeaters 11 are optionally required as the signal 1 becomes attenuated with distance due to losses within the optical fibre 3. The optical signal 26 is received at the optical detector 9 and amplified to an electrical signal by the post amp 10.

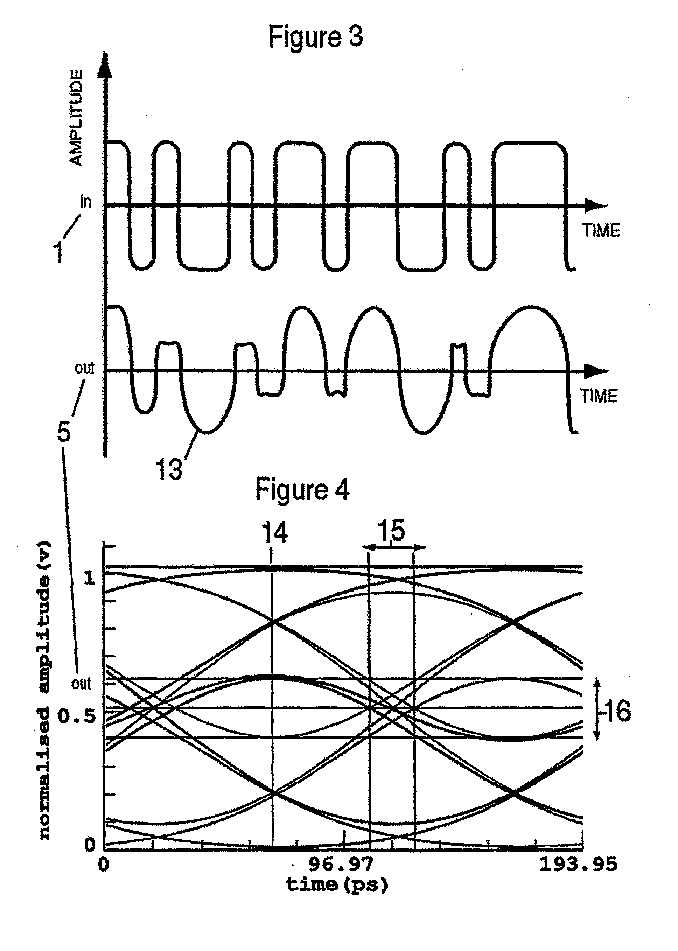

Figure 3 shows the time-domain input and output waveforms of the entire communications system represented in Figure 2 when the signal processing element 7 is disabled. The figure shows the input signal waveform 1 and the modestly distorted output signal waveform 5 when no equalisation or other correction is employed. Note that the exact output waveform 5 is for illustrative purposes only and more or less complex distortion can occur, and for this purpose no random or further deterministic jitter is shown. The waveforms drawn illustrate a non return to zero (NRZ) signalling scheme which is most likely implemented as a differential signal with the signal swinging above (positive) and below (negative) the zero axis. Where the signal is intended to be digital or binary in nature the signals may be alternatively represented by digital signals where a logical "one" is a differentially positive signal and a logical "zero" is a differentially negative signal.

Figure 4 shows an alternative and readily used time-domain representation of the output waveform 5 as described in Figure 3 and called an "eye-diagram". The purpose of the post receiving stage (not shown) is to determine the optimal sampling point, for example in the middle of the "eye" 14 and decide whether a "one" or a "zero" was sent. However making a decision on whether the signal should be a "one" or a "zero" is made more difficult by the data jitter 15 and eye closure 16. The jitter 15 increases and the eye closes 16 due to a number of impairment and degradation mechanisms. This commonly manifests itself as inter-symbol interference as neighbouring bit-patterns constructively or destructively interfere.

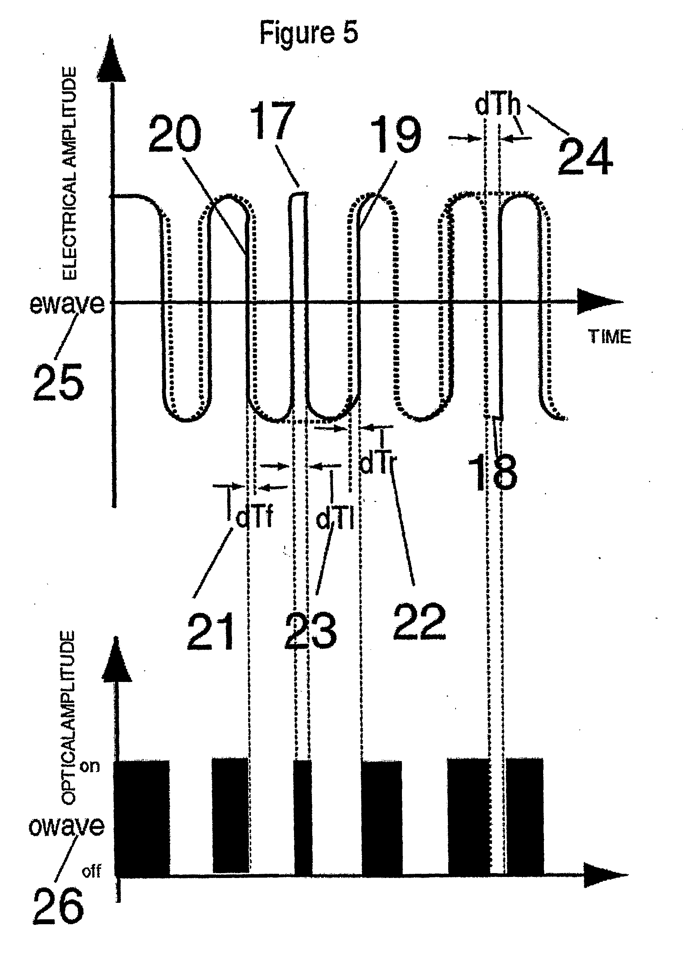

Figure 5 shows a definition of a new input waveform "wave", synthesised using the adaptable signal processor 7. The top waveform 25 drawn illustrates the electrical signal, ewave 25, using a NRZ signalling scheme which is most likely implemented as a differential signal with the signal swinging above (+ve) and below (-ve) the zero axis.

Where the signal is intended to be digital or binary in nature the signals may be alternatively represented by digital signals where a logical "one" is a differentially positive signal and a logical "zero" is a differentially negative signal.

The lower waveform in Figure 5 represents the resultant optical output, owave 26, generated by the optical source 8. This waveform illustrates that the light is either on or off as controlled by the electronic signal ewave 25. Therefore, an important advantage of this scheme is clearly visible in that this scheme does not at all rely on any amplitude characteristic of the electronic signal ewave 25 or intensity response from the optical source 8 to an electronic amplitude in order to achieve equalisation. This is important as the optical source driving electronics normally would contain a limiting amplifier and the optical source would be driven into a power maximum condition, rather than linearly controlled, as the source is extremely non-linear in nature.

Electronic signal ewave 25 shows all rising edges 19, or all falling edges 20 can be independently extended or reduced in time, represented by dTr 22 or dTf 21 respectively, in order to alter the spatial zero crossing and by adding or reducing energy within the transmitted bit patterns. These altered pulse edges can therefore be employed to counteract artefacts including edge distortion, non-linear rise fall times, duty cycle distortions and laser chirp.

In addition energy can be added to a transmitted "zero" by temporarily inverting the optical signal 30 so as to insert a short pulse of "one" 17, with duration dTI 23, and energy can be independently removed from a transmitted "one" by temporarily inverting the optical signal 30 so as to inserting a small pulse of "zero" 18, with duration dTh 24. This is a remedy for equalising modal, chromatic and polarisation distortion within the optical fibre or other bandwidth limitations. In so doing the adaptable signal processor 7 stops symbol dependant energy over-spill from one symbol to the next and minimises interference between symbols and removes ISI. The input waveform 1 is thus pre-distorted by the adaptable signal processor 7. This technique is most appropriate to optical systems because the optical source either usually incorporates a limiter function in the optical pre-drive circuitry or the optical source 8 is operated at near maximum photonic energy output or is so non-linearly compressed so as to act like a limiting function. It is therefore only the existence of the electronic signal ewave 25 above or below the zero-cross discrimination point and not the signal amplitude that warrants attention and suitably exploited when synthesising this equaliser.

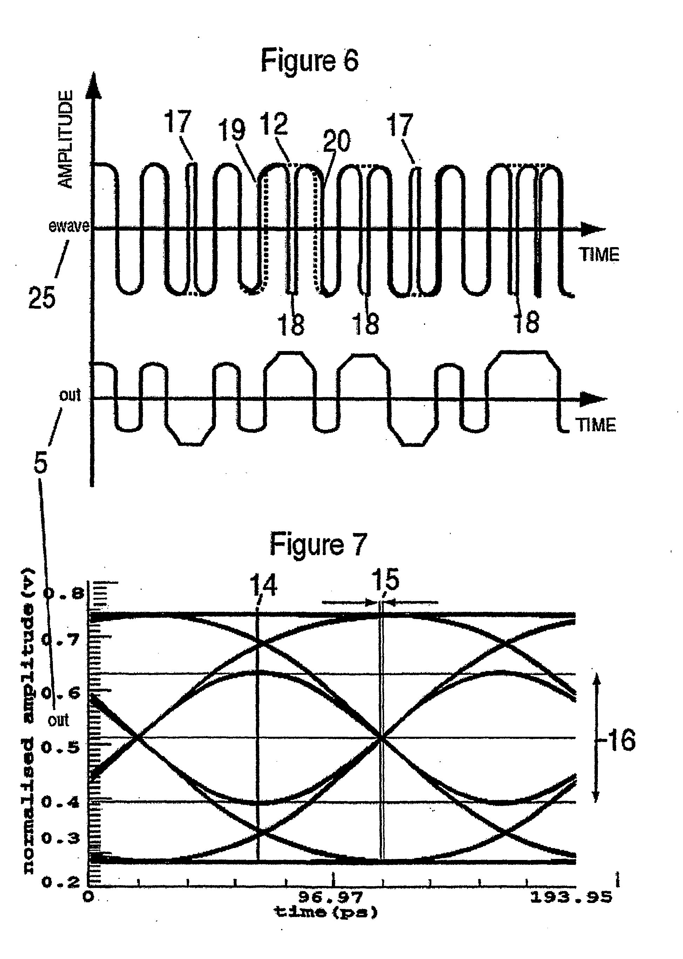

Figure 6 shows the time-domain input and output waveforms in a communications system employing this invention. The figure shows the synthesised electronic signal ewave 25 and the now less distorted output signal 5 after equalisation has been employed. Note this waveform 25 is for illustrative purposes only and no random jitter is shown and depending on the compensating parameters set the waveform can be more or less equalised.

Figure 7 shows the resulting improved "eye diagram" of the information presented in Figure 6. The job of the receiver 4 is made far easier because the data jitter 15 (normally measured in ps) and the eye closure 16 (normally measured in dBs) are greatly improved over that presented in Figure 4. Hence the sampling point 14 is more easily obtained and tracked than that shown in Figure 4.

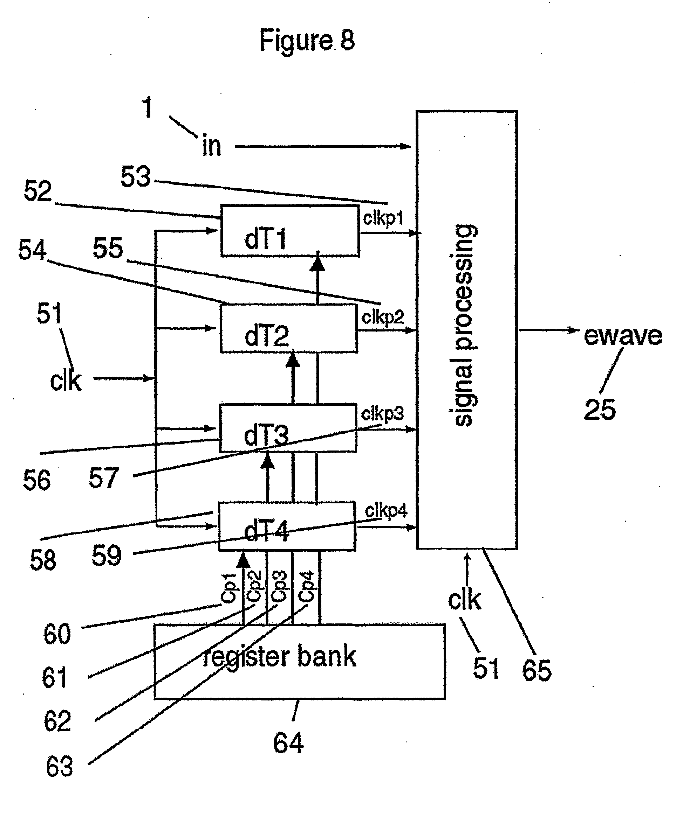

Figure 8 shows a preferred embodiment of a circuit schematic of the adaptable signal processor 7. It can be seen to comprise the input signal, in 1, and its synchronous clock "clk" signal 51 which are employed to produce output "ewave" signal 25 from a signal processor 65. The apparatus shows four programmable time delay circuits dT1 52, dT2 54, dT3 56 and dT4 58. The time delay circuits produce four phases of "clk" 51, "clkp1" 53, "clkp2" 54, "clkp3" 57 and "clkp4" 59 that are delayed but synchronous versions of "clk" 51. The time delay circuits are independently controlled by coefficient words Cp1 60, Cp2 61, Cp3 62 and Cp4 63. The coefficient words are stored in a register bank 64 that can be updated and refreshed as appropriate by a micro controller or such scheme. The time delay circuits 52, 54, 56 and 58 can be readily implemented using, for example, unit delay cells, phase interpolation or delay locked loop techniques or any other scheme that allows a signal to be controllably delayed.

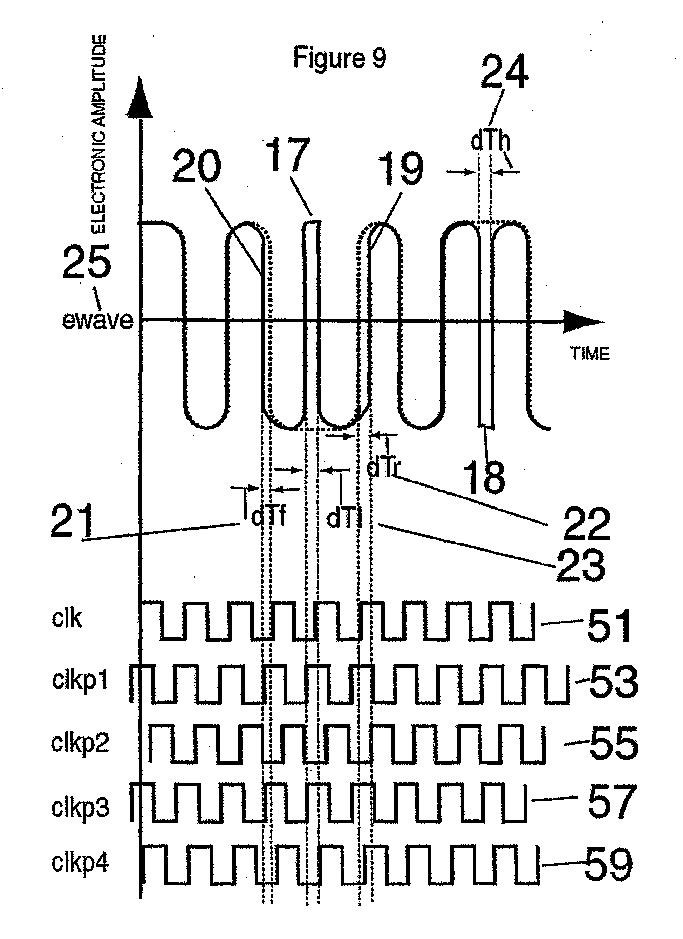

Figure 9 shows a particular electronic waveform 25 generated by the adaptable signal processor 7 when employed in its preferred embodiment as an equalising element. Figure 9 further comprises schematic representations of the "clk" signal 51 and the four generated phases "clkp1" 53, "clkp2" 55, "clkp3" 57 and "clkp4" 59. It should be noted that the clocks shown are all shown at full rate, however similar schemes could be derived using sub-rate clocks without departing from the scope of this invention.

In particular:

- "clkpl" 53 rising marks the falling edge 20 of the "ewave" signal 25, and can be positioned to rise before or after the edge of the "clk" 51 signal thus supporting pre-emption or postponing of the falling edge 20;
- "clkp2" 55 rising marks the rising edge 19 of the "ewave" signal 25, and can be positioned to rise before or after the rising edge of the "clk" 51 signal thus supporting pre-emption or postponing of the rising edge 19;
- "clkp3" 57 marks the leading edge of the inversion sub pulses 17 and 18 of the "ewave" signal 25; and
- "clkp4" 59 marks the trailing edge of the inversion sub pulses 17 and 18 of the "ewave" signal 25.

As the inversion pulses 17 and 18 are broadened by the action of the clocks so more energy is added or removed from the information carrying signal generated by the optical source 8. A second process for varying the energy within the information carrying signal is achieved by shifting in time the inversion sub pulses 18 and 19 through the controlled operation of the clocks. These sub pulses can either be shifted in time towards a rising edge 19 or towards a falling edge 20 so that energy can be accurately removed or added to these edges as appropriate.

In a preferred embodiment the +ve sub pulse inversion 17 and the -ve sub pulse inversion 18 are delimited by the same timing clock edges, namely "clkp3" 57 and "clp4" 59. It will be appreciated by one skilled in the art that this need not necessarily be the case and in other embodiments, the +ve and -ve inversion sub pulses, 17 and 18, could be readily made independently controllable. This could be achieved via the incorporation of additional time delay elements so as to generate additional clocks and appropriate changes to the signal processor 65 in order to include this data dependency.

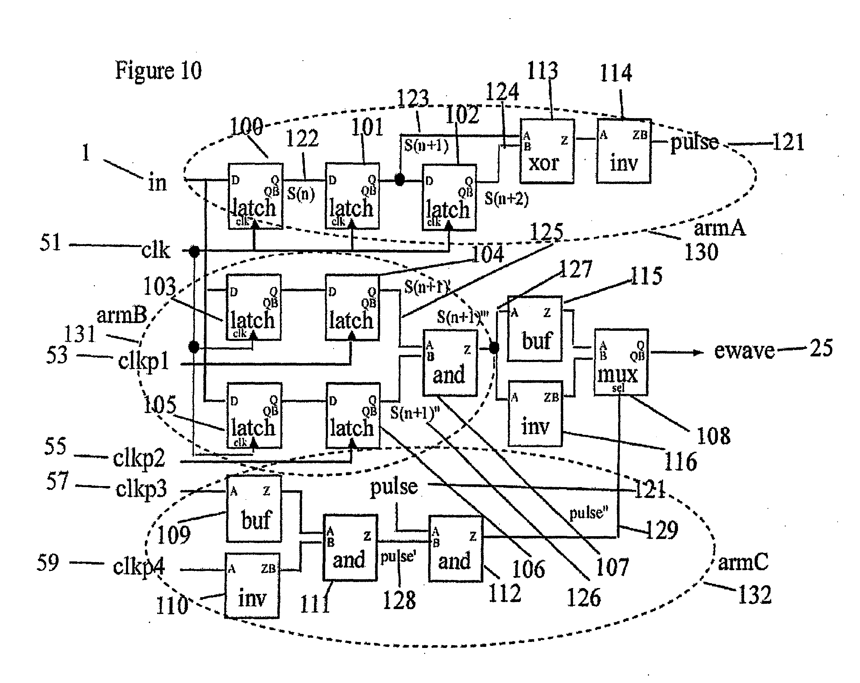

Further detail of the signal processing block 65 is presented in Figure 10. In summary:

- Elements "inv" 114, 116, 110 act to logically invert the signal between their input and their output values;
- Elements "buf" 115, 109 act to buffer the signal between their input and their outputs, often used as unit delay elements to match "inv" elements for timing purposes;
- Element "xor" 113 act to logically convert the signal between their input and their outputs, such that the output is only a logic high when one and only one input is logically high;
- Elements "and" 107, 111, 112 act to logically convert the signal between their input and their outputs, such that the output is only a logic high when both inputs are logically high; and
- Elements "latch" 100,101,102,103,104,105,106 act to logically convert the signal between their input and their outputs, such that the output is a copy of its input but delayed one clock cycle by the action of the respective clk so as to act as a memory element that latches its input to its output.

It will again be apparent to those skilled in the art that other elemental logical functions can be used to form equivalent logical functions within Figure 10 without departing from the scope of this invention. It should also be noted that latch elements 100, 103 and 105 are optional elements, and are incorporated for timing synchronisation purposes only.

The purpose of the logic elements indicated as Arm A 130 is to produce a "pulse" signal 121. Figure 10 shows that the input signals to Arm A comprise the input signal "in" 1 and the clock signal "clk" 51. A next sample output S(n) 122, a present sample output S(n+1) 123 and a previous sample output S(n+2) 124 are the outputs from the latches 100, 101 and 102, respectively in response to clock signal "clk" 51. The internal "pulse" signal 121 is thus generated whenever two identical consecutive preceding bits in S(n+1) 123 and S(n+2) 124 are detected, shown here generated by the "xor" function of element 113 and inversion in "inv" 114 in order to produce the correct pulse signal 121.

The purpose of Arm C 132 is to produce a pulse" signal 129 so providing a means for generating sub pulses 17 and 18. Arm C 132 comprises elements 109 "buf" employed to provide a delay element to match that introduced by element "inv" 110. Element 111 "and" acts so as to create a shortened gating pulse pulse' 128 as defined by the edges of "clkp3" 57 and "clkp4" 59, and the coincidence of their high periods. The shortened pulse pulse" 129 is then produced from the output of element "and" 112 under the gating control of the internal pulse 121 employed here as a control signal. The pulse" 129 gating signal is therefore data dependant, as determined by Arm A 130, and thus the sub pulse are data dependently controlled so as to either allow normal 17 or inverted 18 sub pulses to be multiplexed by "mux" 108 onto on the electronic signal ewave 25. In so doing bit symbols can be temporarily inverted and electronic equalisation provided without any requirement for normal amplitude modulation techniques being employed to the optical signal 30.

The purpose of Arm B 131 is to produce an S(n+1)''' signal 127 and so provide a means for varying the rising 19 and falling edges 20. Arm B 131 comprises latch elements 104 and 106 that act,to transfer the data from the controlled phase delayed clock signals "clkp1" 53 and "clkp2" 55 respectively in order to advance or retard the timing edges in the signals S(n+1)' 125 and S(n+1)'' 126. Logical "and" element 107 provides the logical function to produce the new signal S(n+1)''' 127, which contains identical data to S(n+1) 123 except that its rising and falling edges have been manipulated by the action of "clkp1" 53 and "clkp2" 55. Element 116 "inv" provides a logical inversion and element 115 "buf" provides a time delay buffer to match the delay introduced by "inv" of 116. Subsequent modification is done by "Mux" 108 which outputs electronic signal ewave 25 as either normal or inverted copies of the signal S(n+1)''' under control of the pulse" 129 signal.

The synthesised input electronic signal ewave 25 is shown in Figure 5 showing rising edges 19, or falling edges 20 that can be extended or reduced in time, of dTf 21 or dTr 22 respectively, and energy removed from a "zero" by a short pulse of "one" 17, with duration dTl 23, and energy removed from a "one" by inserting a small pulse of "zero" 18, with duration dTh 24. However in alternative embodiments not all features of the method are required to be employed such that the edge time extension or reduction effects and/or the sub pulse insertion effects can be used to lesser degree, or completely removed. An associated reduction in the required apparatus to implement these solutions would then occur. Particular alternative embodiments can be achieved by:

1) Excluding Arm B 131 so that no edge modifications are possible. In this embodiment the signal S(n+1)''' 127 would be provided directly by the S(n+1) 123 signal;
2) Excluding within Arm B 131 elements 103 and 104, that control the rising edge of electronic signal ewave 25, or 105 and 106, that control the falling edge of electronic signal ewave 25. In this embodiment only rising or falling edge modifications respectively are possible and requires the signal S(n+1)' 125 or S(n+1)'' 126 to be replaced by S(n+1) 123, as appropriate;
3) Excluding within Arm C "clkp3" 57 and "buf" 109 and replacing with "clk" 51 so that the rising edge of pulse" 129 is determined directly by "clk" 51 and is not controllable.
4) Excluding within Arm C "clkp4" 59 and "inv" 110 and replacing with "clk" 51 so that the falling edge of pulse" 129 is determined directly by "clk" 51 and is not controllable.

In a further alternative embodiment the width of the sub pulses 17 and 18 can be applied independently to either the high or low signals within the data sequence. This is achieved by replacing the "xor" 113 with parallel "and" and "nand" functions so producing two signals, namely "pulse_h" and "pulse_1". The "pulse_h" and "pulse_1" signals can then be used with a simple modification to Arm C 132 so as to accommodate the additional pulse selection via an additional selection element ("and" or "mux") that selects the signal pulse" 129 origin as being for a high (pulse_h) or low (pulse_l) data sequence. Additional clock phases would then be required in order to separately control the rising and falling edges of this additional selection of data dependant sub pulses.

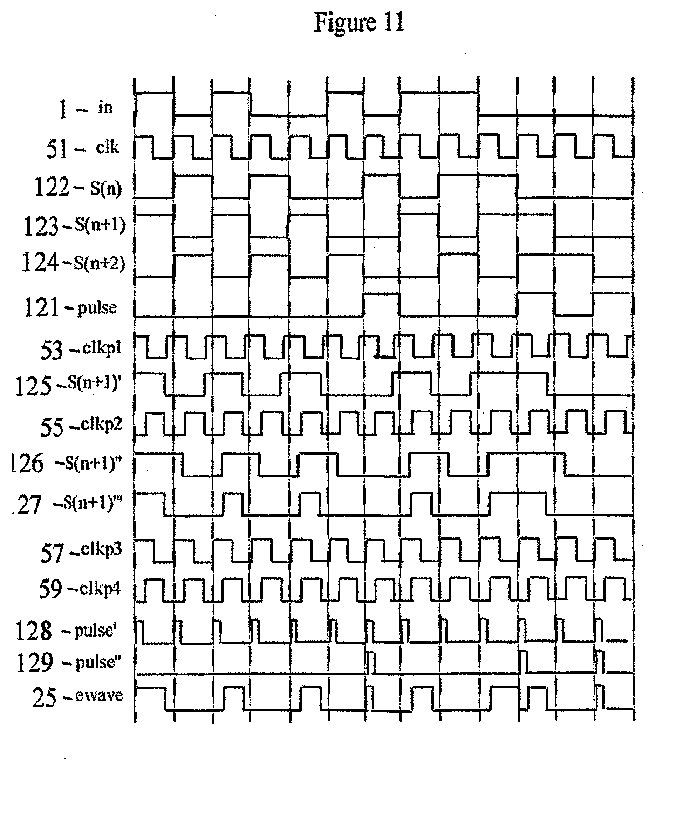

Figure 11 more clearly shows the signal timing and logical relationships within the signal processing apparatus of Figure 10 and illustrates the scheme from the serial input signal "in" 1 to the electronic signal ewave 25.

Using the above signal processing scheme a time-domain or z-transform filter function is therefore effectively synthesised where the energy of any bit is a function of what has previously been sent. Expressing this in normal z-domain sampled data convention.

$$Y(z) = X(z)*H(z)$$

where:

Y(z) is the relative energy of the output sample
X(z) is the relative energy of the input sample
H(z) is the filter transfer function

$$H(z) = A(1 - BZ^{-1})$$

where:

$$A = (Ts-dTf-dTr)$$

$$B = 1/(Ts+dTf+dTr-dTl) \text{ for transmitted zeros}$$

or

$$= 1/(Ts-dTf-dTr-dTh) \text{ for transmitted ones}$$

and where:

Ts= symbol bit period
dTl = pulse inversion period for transmitted zeros
dTh = pulse inversion period for transmitted ones

(as defined in Figure 9)

It should be noted that this z-domain technique does not completely describe the action of the filter invention as it does not describe how energy can be shifted within one sample.

The described method and apparatus effectively provides a non linear (signal dependant) 1st order high frequency bandpass filter. By employing additional previous and future sample information through the incorporation of additional "latch" elements, and by using additional "xor" logical elements or similar structures, higher order high frequency band pass filters can readily be achieved.

It will be obvious to one skilled in the art that by altering the timing of the various clock pulses the adaptable signal processor can be converted so as to act as a low frequency bandpass filter, the order of which is dictated by the number of "latch", or similar elements, incorporated within the circuit.

The apparatus if Figure 8 and 10 the signal processor uses no filter function to determine the S(n+1)''' signal. However, this can readily be made data dependant and filters can be readily implemented by using a variety of logical schemes such as used to generate the pulse 121.

Furthermore the apparatus of Figure 8 and 10 suggests that the signals are single bit digital lines. In practice they would most likely be differential signals with differential source coupled logic cells. These figures also suggest that the signals are only one bit wide but similar architecture using multiple bit wide parallel data lines could be used in high bandwidth systems with time-interleaving appropriately used for improved power trade-offs.

Aspects of the present invention described herein refer to a single channel communications system. However, in alternative embodiments, more channels can be employed, such as in a multi-core optical fibre or multi-strand twisted-pair e.g. CAT-5 cabling. The described aspects also refer to a communication system with a single channel with a single transmission signal present on the channel. However, in some embodiments, transmissions can be across one or more shared media channels using one or more signals such as, but not limited to, optical wave division multiplexing schemes (DWDM, CWDM), using multiple equalisers per signal.

The preferred embodiment of the present invention describes use mainly within the context of a fibre optic medium, however it is anticipated that it may be employed with alternative transmission medium including, but not limited to, over air, optical fibre, printed circuit board or cable. Similarly aspects of the present invention may employ alternative transmission signal formats including, but not limited to, modulated, unmodulated, return to zero coding, non return to zero coding, encoded data, non encoded data, multi-level, binary, continuous or discontinuous, framed, burst or packet based or any combination of these. Furthermore, aspects of the present invention may employ alternative transmission technique including, but not limited to, electrical, electro-magnetic, magnetic or optical means.

The apparatus of aspects of the present invention present the transmitter 2 and the receiver 4 as two separate elements or components. Alternative embodiments that comprise multiple channel and bi-directional systems that incorporate transmitters and receiver that are joined or part joined within the same combined element or component of the system with the equaliser possibly additionally contained within.

The described apparatus further describes that the transmitter 2 is a distinct and separate element made up of two parts, the adaptable equaliser 7 and the optical source 8. However, alternative embodiments are envisaged where the transmitter element may also include a combination of additional separate, not necessarily distinct elements in any combination or form, such as a parallel to serial data converter, clock-data recovery unit, re-synchroniser, line driver, equaliser, optical source driver and the optical source itself.

Further alternative embodiments of aspects of the present invention include the communications system containing additional filters, transducers, amplifiers, sensors or other elements or components between multiple or single transmitters, receivers and medias. In addition the communication system could contain continuous or separate sections of media, separated by filters, transducers, sensors, transponders, transceivers, transmitters, receivers or other elements so as to break the media into one or more sections of not necessarily the same type of media.

The input signal 1, synthesis electronic signal ewave 25, optical wave owave 26 and apparatus presents a solution to a single binary on -off coding scheme. However, the principle can be applied to similar waves that are encoded in multiple levels such as a pulse amplitude modulation scheme (PAM encoding) and signal processing provided using a similar method.

In systems where the output amplitude can also be also directly influenced by the instantaneous amplitude of the ewave signal 25, additional equalisation can be applied using an amplitude modulation technique or the superposition of an additional pulse onto the ewave signal as appropriate to increase the energy of the signal in the frequencies of interest. A superposition technique such as analogue summation could be used.

Described herein is a method and apparatus for adapting an information carrying signal within of before an associated transmitter. This adaptation provides an efficient way of not only producing frequency dependent filters but also provides an effective means for the equalisation of the information carrying signal. The transmitter effectively equalises by providing a pre-correction or compensation of the signal. As a result the transmitter based equalisation schemes described is capable of achieve higher performance than other prior art systems where equalisation takes place within the receiver or elsewhere in the channel. This effect is a direct result of the fact that this system can be designed so that the desired information carrying signal can be kept above the noise or other interference levels and hence can be more easily interpreted at the receiver. Furthermore, as the transmitter has an intrinsically accurate knowledge of what it is trying to transmit, and given information on what signal impairments exist in the system, more simplistic, intelligent, signal aware schemes such as those described above are possible.

A significant advantage of the described system is that it is very accurately controllable, has a fine resolution, a wide equalisation range, requires few high performance circuit elements to implement, requires less components or circuitry, requires little additional power and can be designed for low cost and high volume manufacturing than existing known schemes.

Additionally, because the synthesis technique is more controllable, this invention can provide more sophisticated equalisation or compensation for affects other simple bandwidth limitations such as complex non-linear and signal dependant ones. One practical use of this scheme is in high-speed fibre-optic systems where transmission distances are greatest and channel impairments are complex. Examples of such complex impairments include modal, chromatic and polarisation dispersion and chirp of the optical fibre, saturation and scattering properties of the optical source and asymmetries and bandwidth limitations of the optical transmitter and receiver responses.

A.further advantage of aspects of the present invention is that because both the eye closure 29 per length of media is improved and because the data jitter 28 per unit media is reduced, greater distance can be travelled before complete opto-electronic-opto signal regeneration or re-timing units are required. This greatly benefits the systems because it enables cheaper all optical systems to be made.

A yet further advantage is that more cost effective, lossy or dispersive media can be used and over greater distances in higher data rate applications. For example, twisted pair could be used where previously coaxial cable would have been required or multi-mode fibre where previously single-mode fibre was used.

Generally the method and apparatus of aspects of the present invention provide for the development and manufacture of higher performance communications systems, including optical ones, that are less expensive, less complex, less power demanding or more compact.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.

**Claims**

1. A method of preconditioning an information carrying signal (25, 26) prior to the information carrying signal (25, 26) entering a signal propagation medium (3), the information carrying signal (25, 26) comprising a plurality of data pulses that exhibit a range of pulsewidths and which are generated by a transmitter (2) for transmission through the propagation medium (3),
   **characterised in that**
   the method of preconditioning comprising the generation of sub-pulses by combining a plurality of delayed clock signals; and the introduction of one or more sub-pulses (17, 18) to one or more of the plurality of data pulses by destructive interference, wherein the pulsewidth of each of the one or more sub-pulses (17, 18) is less than a minimum pulsewidth of the plurality of data pulses.

2. A method of preconditioning an information carrying signal (25, 26) as claimed in Claim 1 wherein the introduction of each of the one or more of the sub-pulses (17, 18) is timed so that these sub-pulses (17, 18) are contained within the pulsewidth of the data pulse to which the sub-pulses (17, 18) are introduced.

3. A method of preconditioning an information carrying signal (25, 26) as claimed in any of the preceding claims wherein the introduction of each of the one or more of the sub-pulses (17, 18) is timed so that these sub-pulses (17, 18) coincide with one or more edges (19, 20) of one or more of the plurality of data pulses to which the sub-pulses (17, 18) are introduced.

4. A method of preconditioning an information carrying signal (25, 26) as claimed in any of the preceding claims wherein the one or more sub-pulses (17, 18) are introduced to one or more of the plurality of data pulses when the data pulse exhibits a pulsewidth above a first predetermined pulsewidth of the plurality of data pulses so as to provide a means for low frequency filtering the information carrying signal (25, 26).

5. A method of preconditioning an information carrying signal (25, 26) as claimed in any of the preceding claims wherein the one or more sub-pulses (17, 18) are introduced to one or more of the plurality of data pulses when the data pulse exhibits a pulsewidth below a second predetermined pulsewidth of the plurality of data pulses so as to provide a means for high frequency filtering the information carrying signal (25, 26).

6. A method of preconditioning an information carrying signal (25, 26) as claimed in Claim 4 wherein the first predetermined pulsewidth of the plurality of data pulses corresponds to the minimum pulsewidth of the plurality of data pulses so as to provide a means for equalising the information carrying signal (25, 26).

7. A method of preconditioning an information carrying signal (25, 26) as claimed in any of the preceding claims wherein the timing of introducing the one or more sub-pulses (17, 18) to one or more of the plurality of data pulses is variable.

8. A method of preconditioning an information carrying signal (25, 26) as claimed in any of the preceding claims wherein the number of sub-pulses (17, 18) introduced is directly dependent upon the pulsewidth of the associated data pulse.

9. A method of preconditioning an information carrying signal (25, 26) as claimed in any of the preceding claims wherein the pulsewidth of each of the one or more sub-pulses (17, 18) is directly dependent upon the pulsewidth of the associated data pulse.

10. A method of preconditioning an information carrying signal (25, 26) as claimed in any of Claims 3 to 9 wherein said introduction of one or more sub-pulses causes advancing in time the rising edge (19) of said associated data pulse.

11. A method of preconditioning an information carrying signal (25, 26) as claimed in any of Claims 3 to 10 wherein said introduction of one or more sub-pulses causes delaying in time the falling edge (20) of said associaded data pulse.

12. A method of preconditioning an information carrying signal (25, 26) as claimed in any of Claims 10 or 11 wherein the time shifting of the one or more edges of the associated data pulse is by a predetermined value.

13. A method of preconditioning an information carrying signal (25, 26) as claimed in Claim 10 or 11 wherein the time shifting of the one or more edges of the associated data pulse is directly dependent upon the pulsewidth of the associated data pulse.

14. An electronic circuit (7) suitable for preconditioning an electronic input signal of a transmitter (8), the electronic input signal comprising a plurality of electrical data pulses, the electronic circuit (7) comprises an electronic input channel (1), a clock pulse phase delay circuit (52, 54, 56, 58), a signal processor (65) and an electronic output channel **characterised in that**
the signal processor (65) is suitable for processing one or more of the plurality of electrical data pulses supplied on the electronic input channel (1) and one or more clock pulse phase delay signals (53, 55, 57, 58) provided by the clock pulse phase delay circuit (52, 54, 56, 58, 64) so as to introduce one or more electrical sub-pulses (17, 18) to one or more of the plurality of electrical data pulses by destructive interference to provide an electronic output signal (25) on the electronic output channel.

15. An electronic circuit (7) as claimed in Claim 14 wherein the introduction of each of the one or more of the electrical sub-pulses (17, 18) is timed so that these electrical sub-pulses (17, 18) are contained within the pulsewidth of the one or more of the plurality of electrical data pulses to which the electrical sub-pulses (17, 18) are introduced.

16. An electronic circuit (7) as claimed in Claim 14 or Claim 15 wherein the introduction of each of the one or more of the electrical sub-pulses (17, 18) is timed so that these electrical sub-pulses coincide with one or more edges of one or more of the plurality of electrical data pulses to which the electrical sub-pulses (17, 18) are introduced.

17. An electronic circuit (7) as claimed in any of Claims 14 to 16 wherein the clock pulse phase delay circuit (52, 54, 56, 58, 64) comprises means for supplying a first clock pulse (51) and one or more phase delayed clock pulses (53, 55, 57, 59) to the signal processor (65).

18. An electronic circuit (7) as claimed in any of Claims 14 to 17 wherein the signal processor (65) comprises first electronic means (130) for producing an internal signal pulse (121) when subsequent electrical data pulses exhibit the same value; and
wherein the signal processor (65) further comprises a second electronic means (132) for introducing an electronic sub-pulse (17, 18) to the electronic input signal when the internal signal pulse (121) is detected by the second electronic means (132).

19. An electronic circuit (7) as claimed in Claim 18 wherein the signal processor (65) further comprises a third electronic means (131) for altering the timing of the electrical subpulses (17, 18) so allowing the subpulses (17, 18) to coincide with a rising or falling edge of an electrical data pulse.

20. An electronic circuit as claimed in any of Claims 18 or 19 wherein the timing of the first electronic means (130) is controlled by the first clock pulse (51).

21. An electronic circuit as claimed in Claims 19 or 20 wherein the second (132) and third electronic means (131) are controlled by a combination of the first clock pulse (51) and the one or more phase delayed clock pulses (53, 55, 57, 59).

**Patentansprüche**

1. Eine Methode zur Vorbehandlung eines informationsübertragenden Signals (25, 26), bevor das informationsübertragende Signal (25, 26) in ein Signalausbreitungsmedium (3) eintritt, dabei besteht das informationsübertragende Signal (25, 26) aus einer Vielzahl von Datenimpulsen, die mehrere Impulsbreiten aufweisen und die mit Hilfe eines Transmitters (2) zur Übertragung durch das Ausbreitungsmedium (3) erzeugt werden.
Sie zeichnet sich folgendermaßen aus:

Eine Methode zu Vorbehandlung, bei der Subimpulse durch die Kombination einer Vielzahl von verzögerten Taktsignalen erzeugt werden und bei der ein Subimpuls oder mehrere Subimpulse (17, 18) mittels destruktiver Interferenz in einen Datenimpuls oder mehrere der vielen Datenimpulse eingeführt wird/werden, wobei die Impulsbreite von jedem einzelnen Subimpuls oder mehreren Subimpulsen (17, 18) kleiner ist als die minimale Impulsbreite der Vielzahl an Datenimpulsen.

2. Eine Methode zur Vorbehandlung eines informationsübertragenden Signals (25, 26), wie in Anspruch 1 gefordert wird, bei der die Einführung von jedem einzelnen Subimpuls oder mehreren Subimpulsen (17, 18) zeitlich so bestimmt ist, dass diese Subimpulse (17, 18) in der Impulsbreite des Datenimpulses enthalten sind, in den die Subimpulse (17, 18) eingeführt werden.

3. Eine Methode zur Vorbehandlung eines informationsübertragenden Signals (25, 26), wie in den vorangehenden Ansprüchen gefordert wird, bei der die Einführung von jedem einzelnen Subimpuls oder mehreren Subimpulsen (17, 18) zeitlich so bestimmt ist, dass diese Subimpulse (17, 18) mit einer Flanke oder mehreren Flanken (19, 20) von einem Datenimpuls oder mehreren der vielen Datenimpulse zusammentreffen, in die die Subimpulse (17, 18) eingeführt werden.

4. Eine Methode zur Vorbehandlung eines informationsübertragenden Signals (25, 26), wie in den vorangehenden Ansprüchen gefordert wird, bei der ein Subimpuls oder mehrere Subimpulse (17, 18) in einen Datenimpuls oder mehrere der vielen Datenimpulse eingeführt wird/werden, wenn der Datenimpuls eine Impulsbreite aufweist, die über einer zuerst festgelegten Impulsbreite der vielen Datenimpulse liegt, um somit eine Niederfrequenzfilterung des informationsübertragenden Signals (25, 26) zu ermöglichen.

5. Eine Methode zur Vorbehandlung eines informationsübertragenden Signals (25, 26), wie in den vorangehenden Ansprüchen gefordert wird, bei der ein Subimpuls oder mehrere Subimpulse (17, 18) in einen Datenimpuls oder mehrere der vielen Datenimpulse eingeführt wird/werden, wenn der Datenimpuls eine Impulsbreite aufweist, die unter der zweiten festgelegten Impulsbreite der vielen Datenimpulse liegt, um somit eine Hochfrequenzfilterung des informationsübertragenden Signals (25, 26) zu ermöglichen.

6. Eine Methode zur Vorbehandlung eines informationsübertragenden Signals (25, 26), wie in Anspruch 4 gefordert wird, bei der die zuerst festgelegte Impulsbreite der vielen Datenimpulse der minimalen Impulsbreite der vielen Datenimpulse entspricht, um somit einen Ausgleich des informationsübertragenden Signals (25, 26) zu ermöglichen.

7. Eine Methode zur Vorbehandlung eines informationsübertragenden Signals (25, 26), wie in den vorangehenden Ansprüchen gefordert wird, bei der die zeitliche Einführung von einem Subimpuls oder mehreren Subimpulsen (17, 18) in einen Datenimpuls oder mehrere der vielen Datenimpulse variabel ist.

8. Eine Methode zur Vorbehandlung eines informationsübertragenden Signals (25, 26), wie in den vorangehenden Ansprüchen gefordert wird, bei der die Anzahl der eingeführten Subimpulse (17, 18) direkt von der Impulsbreite des zugehörigen Datenimpulses abhängt.

9. Eine Methode zur Vorbehandlung eines informationsübertragenden Signals (25, 26), wie in den vorangehenden Ansprüchen gefordert wird, bei der die Impulsbreite von jedem einzelnen Subimpuls oder mehreren Subimpulsen (17, 18) direkt von der Impulsbreite des zugehörigen Datenimpulses abhängt.

10. Eine Methode zur Vorbehandlung eines informationsübertragenden Signals (25, 26), wie in den Ansprüchen 3 bis 9 gefordert wird, bei der besagte Einführung von einem Subimpuls oder mehreren Subimpulsen den zeitlichen Vorsprung der ansteigenden Flanke (19) von besagtem zugehörigen Datenimpuls bewirkt.

11. Eine Methode zur Vorbehandlung eines informationsübertragenden Signals (25, 26), wie in den Ansprüchen 3 bis 10 gefordert wird, bei der besagte Einführung von einem Subimpuls oder mehreren Subimpulsen die Zeitverschiebung der abfallenden Flanke (20) von besagtem zugehörigen Datenimpuls bewirkt.

12. Eine Methode zur Vorbehandlung eines informationsübertragenden Signals (25, 26), wie in den Ansprüchen 10 oder 11 gefordert wird, bei der die Zeitverschiebung von einer Flanke oder mehreren Flanken des zugehörigen Datenimpulses einem zuvor festgelegten Wert entspricht.

13. Eine Methode zur Vorbehandlung eines informationsübertragenden Signals (25, 26), wie in den Ansprüchen 10 oder 11 gefordert wird, bei der die Zeitverschiebung von einer Flanke oder mehreren Flanken des zugehörigen Datenimpulses direkt von der Impulsbreite des zugehörigen Datenimpulses abhängt.

14. Eine elektronische Schaltung (7), die sich für die Vorbehandlung eines elektronischen Eingabesignals von einem Transmitter (8) eignet, wobei das elektronische Eingabesignal aus einer Vielzahl von elektrischen Datenimpulsen besteht; die elektronische Schaltung (7) beinhaltet einen elektronischen Eingabekanal (1), eine Phasenverzögerungsschaltung für die Taktimpulse (52, 54, 56, 58), einen Signalprozessor (65) und einen elektronischen Ausgabekanal.
Sie zeichnet sich folgendermaßen aus:

Der Signalprozessor (65) eignet sich dazu, um einen elektrischen Datenimpuls oder mehrere der vielen elektrischen Datenimpulse, die über den elektronischen Eingabekanal (1) bereitgestellt werden, und eines oder mehrere der Phasenverzögerungssignale der Taktimpulse (53, 55, 57, 58), die durch die Phasenverzögerungsschaltung für die Taktimpulse (52, 54, 56, 58, 64) geliefert werden, hindurchzuleiten, um somit einen elektrischen Subimpuls oder mehrere elektrische Subimpulse (17, 18) in einen elektrischen Datenimpuls oder in mehrere der vielen elektrischen Datenimpulse durch destruktive Interferenz einzuführen und auf diese Weise ein elektronisches Ausgabesignal (25) im elektronischen Ausgabekanal bereitzustellen.

15. Eine elektronische Schaltung (7), wie in Anspruch 14 gefordert wird, bei der die Einführung von jedem einzelnen elektrischen Subimpuls oder mehreren elektrischen Subimpulsen (17, 18) zeitlich so bestimmt ist, dass diese elektrischen Subimpulse (17, 18) in der Impulsbreite von einem elektrischen Datenimpuls oder mehreren der vielen elektrischen Datenimpulse enthalten sind, in die die elektrischen Subimpulse (17, 18) eingeführt werden.

16. Eine elektronische Schaltung (7), wie in Anspruch 14 oder Anspruch 15 gefordert wird, bei der die Einführung von jedem einzelnen elektrischen Subimpuls oder mehreren elektrischen Subimpulsen (17, 18) zeitlich so bestimmt ist, dass diese elektrischen Subimpulse mit einer Flanke oder mehreren Flanken von einem elektrischen Datenimpuls oder mehreren der vielen elektrischen Datenimpulse zusammentreffen, in die die elektrischen Subimpulse (17, 18) eingeführt werden.

17. Eine elektronische Schaltung (7), wie in den Ansprüchen 14 bis 16 gefordert wird, bei der die Phasenverzögerungsschaltung für die Taktimpulse (52, 54, 56, 58, 64) die Bereitstellung eines ersten Taktimpulses (51) und eines Taktimpulses oder mehrerer Taktimpulse aus der Phasenverzögerung (53, 55, 57, 59) an den Signalprozessor (65) ermöglicht.

18. Eine elektronische Schaltung (7), wie in den Ansprüchen 14 bis 17 gefordert wird, bei der der Signalprozessor (65) erste elektronische Mittel (130) für die Erzeugung eines inneren Signalimpulses (121) impliziert, wenn nachfolgende elektrische Datenimpulse den gleichen Wert aufweisen; und bei der der Signalprozessor (65) weiterhin ein zweites elektronisches Mittel (132) für die Einführung eines elektronischen Subimpulses (17, 18) in das elektronische Eingabesignal impliziert, wenn der innere Signalimpuls (121) von dem zweiten elektronischen Mittel (132) erkannt wird.

19. Eine elektronische Schaltung (7), wie in Anspruch 18 gefordert wird, bei der der Signalprozessor (65) weiterhin ein drittes elektronisches Mittel (131) zur Änderung der Zeitsteuerung von den elektrischen Subimpulsen (17, 18) impliziert und somit ermöglicht, dass die Subimpulse (17, 18) mit einer ansteigenden oder abfallenden Flanke eines elektrischen Datenimpulses zusammentreffen.

20. Eine elektronische Schaltung, wie in den Ansprüchen 18 oder 19 gefordert wird, bei der die Taktung des ersten elektronischen Mittels (130) über den ersten Taktimpuls (51) gesteuert wird.

21. Eine elektronische Schaltung, wie in den Ansprüchen 19 oder 20 gefordert wird, bei der das zweite (132) und dritte elektronische Mittel (131) durch eine Kombination aus dem ersten Taktimpuls (51) und dem Taktimpuls oder mehreren Taktimpulsen aus der Phasenverzögerung (53, 55, 57, 59) gesteuert werden.

**EP 1 683 283 B1**

**Revendications**

1. Procédé de préconditionnement d'un signal porteur d'informations (25, 26) avant que ledit signal porteur d'informations (25, 26) entre dans un support de propagation de signaux (3), le signal porteur d'informations (25, 26) comprenant une pluralité d'impulsions de données qui présentent une gamme de durées d'impulsions et qui sont générées par un émetteur (2) pour la transmission par le support de propagation (3).
   **caractérisé en ce que**:

   le procédé de préconditionnement comprenant la génération de sous-impulsions par combinaison d'une pluralité de signaux d'horloge retardés ; et l'introduction d'une ou de plusieurs sous-impulsions (17, 18) dans une ou plusieurs de la pluralité d'impulsions de données par interférence destructive, dans laquelle la durée d'impulsion de la ou de chacune des sous-impulsions (17, 18) est inférieure à une durée d'impulsion minimum de la pluralité d'impulsions de données.

2. Procédé de préconditionnement d'un signal porteur d'informations (25, 26) selon la revendication 1 dans lequel l'introduction de la ou de chacune des sous-impulsions (17, 18) est synchronisé de telle sorte que lesdites sous-impulsions (17, 18) sont contenues dans la durée d'impulsion de l'impulsion de données dans laquelle les sous-impulsions (17, 18) sont introduites.

3. Procédé de préconditionnement d'un signal porteur d'informations (25, 26) selon l'une quelconque des revendications précédentes dans lequel l'introduction de la ou de chacune des sous-impulsions (17, 18) est synchronisée de telle sorte que lesdites sous-impulsions (17, 18) coïncident avec un ou plusieurs flancs (19, 20) d'une ou de plusieurs de la pluralité d'impulsions de données dans laquelle les sous-impulsions (17, 18) sont introduites.

4. Procédé de préconditionnement d'un signal porteur d'informations (25, 26) selon l'une quelconque des revendications précédentes dans lequel une ou plusieurs sous-impulsions (17, 18) sont introduites dans une ou plusieurs de la pluralité d'impulsions de données lorsque l'impulsion de données présente une durée d'impulsion supérieure à une première durée d'impulsion prédéterminée de la pluralité d'impulsions de données pour fournir un moyen de filtrage basse fréquence du signal porteur d'informations (25, 26).

5. Procédé de préconditionnement d'un signal porteur d'informations (25, 26) selon l'une quelconque des revendications précédentes dans lequel une ou plusieurs sous-impulsions (17, 18) sont introduites dans une ou plusieurs de la pluralité d'impulsions de données lorsque l'impulsion de données présente une durée d'impulsion inférieure à une seconde durée d'impulsion prédéterminée de la pluralité d'impulsions de données pour fournir un moyen de filtrage haute fréquence du signal porteur d'informations (25, 26).

6. Procédé de préconditionnement d'un signal porteur d'informations (25, 26) selon la revendication 4 dans lequel la première durée d'impulsion prédéterminée de la pluralité d'impulsions de données correspond à la durée d'impulsion minimum de la pluralité d'impulsions de données pour fournir un moyen d'égalisation du signal porteur d'informations (25, 26).

7. Procédé de préconditionnement d'un signal porteur d'informations (25, 26) selon l'une quelconque des revendications précédentes dans lequel le moment de l'introduction de la ou des sous-impulsions (17, 18) dans une ou plusieurs de la pluralité d'impulsions de données est variable.

8. Procédé de préconditionnement d'un signal porteur d'informations (25, 26) selon l'une quelconque des revendications précédentes dans lequel le nombre de sous-impulsions (17, 18) introduites dépend directement de la durée d'impulsion de l'impulsion de données associée.

9. Procédé de préconditionnement d'un signal porteur d'informations (25, 26) selon l'une quelconque des revendications précédentes dans lequel la durée d'impulsion de la ou de chacune des sous-impulsions (17, 18) dépend directement de la durée d'impulsion de l'impulsion de données associée.

10. Procédé de préconditionnement d'un signal porteur d'informations (25, 26) selon l'une quelconque des revendications 3 à 9 dans lequel ladite introduction d'une ou de plusieurs sous-impulsions fait avancer dans le temps le flanc montant (19) de ladite impulsion de données associée.

11. Procédé de préconditionnement d'un signal porteur d'informations (25, 26) selon l'une quelconque des revendications 3 à 10 dans lequel ladite introduction d'une ou de plusieurs sous-impulsions retarde dans le temps le flanc descendant (20) de ladite impulsion de données associée.

12. Procédé de préconditionnement d'un signal porteur d'informations (25, 26) selon l'une quelconque des revendications 10 ou 11 dans lequel le ou les flancs de l'impulsion de données associée sont décalés dans le temps d'une valeur prédéterminée.

13. Procédé de préconditionnement d'un signal porteur d'informations (25, 26) selon l'une quelconque des revendications 10 ou 11 dans lequel le décalage temporel d'un ou de plusieurs flancs de l'impulsion de données associée dépend directement de la durée d'impulsion de l'impulsion de données associée.

14. Circuit électronique (7) permettant de préconditionner un signal d'entrée électronique d'un émetteur (8), ledit signal d'entrée électronique comprenant une pluralité d'impulsions de données électriques, le circuit électronique (7) comprenant un canal d'entrée électronique (1), un circuit de retard de phase d'impulsion d'horloge (52, 54, 56, 58), un processeur de signaux (65) et un canal de sortie électronique.
**caractérisé en ce que** :

le processeur de signaux (65) permet de traiter une ou plusieurs de la pluralité d'impulsions de données électriques fournies sur le canal d'entrée électronique (1) et un ou plusieurs signaux de retard de phase d'horloge (53, 55, 57, 58) fournis par le circuit de retard de phase d'impulsion d'horloge (52, 54, 56, 58, 64) de sorte à introduire une ou plusieurs sous-impulsions électriques (17, 18) dans une ou plusieurs de la pluralité d'impulsions de données électriques par interférence destructive pour fournir un signal de sortie électronique (25) sur le canal de sortie électronique.

15. Circuit électronique (7) selon la revendication 14 dans lequel l'introduction de la ou de chacune des sous-impulsions électriques (17, 18) est synchronisée de telle sorte que ces sous-impulsions électriques (17, 18) sont contenues dans la durée d'impulsion d'une ou de plusieurs de la pluralité d'impulsions de données électriques dans laquelle/lesquelles les sous-impulsions électriques (17, 18) sont introduites.

16. Circuit électronique (7) selon la revendication 14 ou 15 dans lequel l'introduction de la ou de chacune des sous-impulsions électriques (17, 18) est synchronisée de telle sorte que ces sous-impulsions électriques coïncident avec un ou plusieurs flancs d'une ou de plusieurs de la pluralité d'impulsions de données électriques dans laquelle/lesquelles les sous-impulsions électriques (17, 18) sont introduites.

17. Circuit électronique (7) selon l'une quelconque des revendications 14 à 16 dans lequel le circuit de retard de phase d'impulsion d'horloge (52, 54, 56, 58, 64) comprend un moyen de fourniture de première impulsion d'horloge (51) et une ou plusieurs impulsions d'horloge à retard de phase (53, 55, 57, 59) au processeur de signaux (65).

18. Circuit électronique (7) selon l'une quelconque des revendications 14 à 17 dans lequel le processeur de signaux (65) comprend un premier moyen électronique (130) pour produire une impulsion de signal interne (121) quand les impulsions de données électriques suivantes présentent la même valeur ; et dans lequel le processeur de signaux (65) comprend aussi un deuxième moyen électronique (132) pour introduire une sous-impulsion électronique (17, 18) dans le signal d'entrée électronique quand l'impulsion de signal interne (121) est détectée par le deuxième moyen électronique (132).

19. Circuit électronique (7) selon la revendication 18 dans lequel le processeur de signaux (65) comprend aussi un troisième moyen électronique (131) pour modifier la synchronisation des sous-impulsions électriques (17, 18) afin de permettre au sous-impulsions (17, 18) de coïncider avec un flanc montant ou descendant d'une impulsion de données électrique.

20. Circuit électronique (7) selon l'une quelconque des revendications 18 ou 19 dans lequel la synchronisation du premier moyen électronique (130) est contrôlée par la première impulsion d'horloge (51).

21. Circuit électronique (7) selon l'une quelconque des revendications 19 ou 20 dans lequel les deuxième (132) et troisième moyens électroniques (131) sont contrôlés par une combinaison de la première impulsion d'horloge (51) et d'une ou de plusieurs impulsions d'horloge à retard de phase (53, 55, 57, 59).

in 1

TRANSMITTER 2

MEDIA 3

CHANNEL 6

RECEIVER 4

out 5

Figure 1

## Figure 2

EP 1 683 283 B1

## Figure 3

## Figure 4

EP 1 683 283 B1

Figure 5

19

## Figure 6

## Figure 7

## Figure 8

Figure 9

Figure 10

# Figure 11

1 – in
51 – clk
122 – S(n)
123 – S(n+1)
124 – S(n+2)
121 – pulse
53 – clkp1
125 – S(n+1)'
55 – clkp2
126 – S(n+1)"
.27 – S(n+1)'"
57 – clkp3
59 – clkp4
128 – pulse'
129 – pulse"
25 – ewave

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6393062 B
- EP 0884867 A
- US 6091535 A
- EP 0975104 A